# EUROPÄISCHE PATENTSCHRIFT

(11) **EP 1 144 069 B1**
(45) Veröffentlichungstag und Bekanntmachung des Hinweises auf die Patenterteilung: **19.03.2003**
(21) Anmeldenummer: 99941354.5
(22) Anmeldetag: 13.09.1999
(51) Int. Cl.: B01D 29/15, B01D 29/66, B01D 29/70

(54) **KERZENFILTERELEMENT**
CANDLE FILTER ELEMENT
ELEMENT FILTRE A BOUGIES

(30) Priorität: 21.09.1998 CH 192498
(43) Veröffentlichungstag der Anmeldung: 17.10.2001
(73) Patentinhaber: DRM, DR. MÜLLER AG, CH-8708 Männedorf ZH (CH)
(72) Erfinder: MÜLLER, Patrick, CH-8712 Stäfa (CH); SCHUMACHER, Ivo, CH-8645 Jona (CH)
(86) Internationale Anmeldenummer: CH9900426
(87) Internationale Veröffentlichungsnummer: WO00016875

(56) Entgegenhaltungen:
- EP-A- 0 066 921
- DE-B- 1 141 980
- FR-A- 2 388 589

## Beschreibung

Die Erfindung betrifft ein Kerzenfilterelement zum Einbau in einen Druckbehälter, bestehend aus einem auf seiner Oberfläche geschlossenem, entnehmbar angeordnetem Zentralrohr, um welches Stützkörper angeordnet sind, über die ein Filtergewebe gespannt ist.

Ein Kerzenfilterelement der Art ist aus der EP-A-0 066 921 bekannt. Das bekannte Filterelement weist Stützkörper in Form eines Rohrbündels auf. Durch die Verwendung von Rohrbündeln treten jedoch Schwierigkeiten bei der Reinigung, insbesondere vor einem Produktwechsel auf. Produktrückstände in den Zwischenräumen zwischen den einzelnen Rohren lassen sich nur teilweise oder überhaupt nicht entfernen. Dies trifft insbesondere bei der Filtration von Lebensmitteln, pharmazeutischen und biotechnologisch erzeugten Produkten zu, wo eine CIP (Cleaning in place) - Reinigung oder SIP (Sterilization in place) erforderlich ist

Auch die DE-B-11 41 980 offenbart ein Filterelement, bestehend aus einem perforierten zentralen Ablaufrohr. Das zentrale Ablaufrohr ist an seinen beiden Enden offen und nicht zum Ablauf des Filtrats aus einem Druckbehälter geeignet. Um das Zentralrohr sind sternförmig ausgebildete starre Stützkörper befestigt. Der sternförmige Stützkörper bildet mit dem Zentralrohr eine Einheit. Das Zentralrohr kann für die Innenreinigung nicht entfernt werden. Dies ist wesentlich für die Lebensmittel-, pharmazeutische- und biotechnologische Industrie, wo CIP-Reinigungen (Cleaning in Place mit Reinigungsflüssigkeiten) und SIP (Sterilization in Place mit Dampf oder chemischen Produkten ) eine Anforderung der FDA (Food and Drug Administration) ist, um die Trennung der einzelnen Produkte zu gewährleisten.

Da das Filterwebe an den äußersten Spitzen der Stützkörper aufliegen soll tritt an diesen Stellen eine verstärkte Abnutzung der Filtergewebe auf.

Die CH-A-631 352 offenbart ein Filterelement mit einem geschlossenen Zentralrohr. Das Filtergewebe liegt auf den Stäben auf, welche vom Zentralrohr über Querverstrebungen getrennt sind. Das bekannte Filterelement hat den Nachteil, dass das Filtergewebe sich während der Filtration sehr weit gegen das Zentralrohr drückt, wodurch die effektive Filtrationsfläche erheblich verringert wird. Auch hier tritt an den Auflagepunkten durch sehr hohe Zugspannungen verstärkte Abnutzung des Filtergewebes auf. Die Konstruktion mit Längsstäben und Querstäben welche die Verbindung mit dem Zentralrohr herstellen, benötigen viele Verfahrensschritte für ein Filterelement der Art.

Aufgabe der Erfindung ist es, ein Filterelement zu schaffen, das konstruktiv einfach und stabil ist, einen effizienten Feststoffaustrag sichert und trotzdem eine einwandfreie Reinigung gewährleistet.

Diese Aufgabe wird erfindungsgemäß dadurch gelöst, dass der Stützkörper als ein hexalobales Hüllelement ausgebildet ist und die Oberfläche des Hüllelements Öffnungen aufweist und die Krümmungen des Hüllelements Halbkreise beschreiben. Hierbei besteht der Stützkörper aus einer Außenhülle, welche um ein entnembares Zentralrohr angeordnet ist. Das hat den Vorteil, dass schwer zu reinigende Kontaktstellen zwischen den einzelnen Stützelementen wegfallen. Gleichzeitig kann Material und damit Gewicht eingespart und die zu reinigende Fläche reduziert werden.

Es ist zweckmäßig, dass das Hüllelement wenigstens bilobal, bevorzugt wenigstens trilobal, ausgebildet ist. Bei weniger als drei Hüllbogen ist der Reinigungseffekt nicht ausreichend.

Das Hüllelement ist zweckmäßig mit dem Zentralrohr verbunden. Das Zentralrohr kann dabei entnehmbar mit dem Stützkörper verbunden sein. Das hat den Vorteil, dass das Kerzenfilterelement druckfest hergestellt werden kann. Das Entnehmen des Zentralrohrs weist den weiteren Vorteil auf, dass die Zwischenräume zur Reinigung freigelegt werden können.

Es hat sich als besonders vorteilhaft erwiesen, die Krümmungen des Hüllelements als Halbkreise auszubilden. Der gekrümmte Stützkörper hat den Vorteil, dass keine Ecken und Kanten das beispielsweise textile Filtermittel während der Filtration beschädigen. Durch die runde Gestaltung des Stützkörpers wird somit die Lebensdauer des Filtermittels verlängert.

In einer Ausgestaltung ist die Oberfläche des Hüllelements mit Öffnungen versehen. Diese Drainageöffnungen können rund oder eckig, quadratisch, mehreckig oder rechteckig oder schlitzförmig ausgebildet sein.

Schlitzförmige Öffnungen haben sich als besonders vorteilhaft erwiesen. Bei den schlitzförmigen Öffnungen weist die Achse des Hüllelements einen Winkel α von kleiner als 120°, insbesondere zwischen 60° und 120° auf. Ein Winkel von < 60° hat den Nachteil, dass die Festigkeit der Hülle nicht mehr gewährleistet ist; das gleiche gilt für einen Winkel von mehr als 180°. Als am besten geeignetes Material hat sich Edelstahl erwiesen, wie es in der Lebensmittel- und Pharmazeutischen Industrie verwendet wird.

Die Erfindung soll anhand einer Zeichnung näher beschrieben werden. Es zeigen schematisch:
Fig. 1 einen Längsschnitt durch das erfindungsgemäße Kerzenfilterelement
Fig. 2 das Kerzenfilterelement im Querschnitt
Fig. 3 eine Variante des mit dem Zentralrohr verbundenen hexalobalen Hüllelements des Kerzenfilterelements

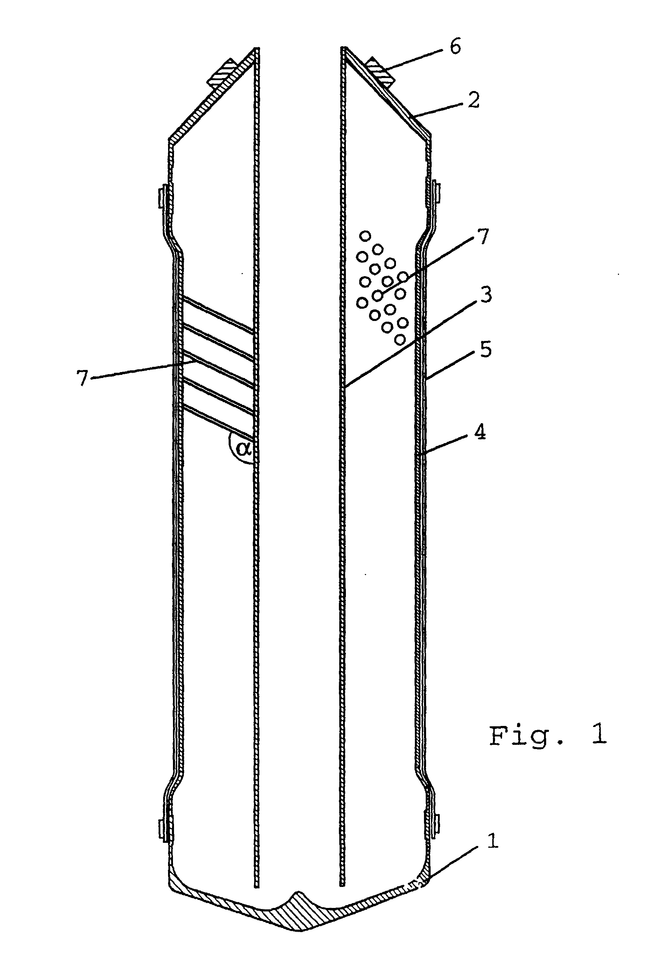

In Fig. 1 ist ein Boden des Kerzenfilterelements mit dem Bezugszeichen 1 bezeichnet. Zwischen dem Boden 1 und einem Kopfteil 2 ist ein Hüllelement 4 angeordnet, welches mit einem Zentralrohr 3 verbunden ist. Das Zentralrohr 3 weist über seine ganze Länge eine geschlossene Oberfläche auf. Über dem Hüllelement 4 ist ein Filtermittel 5 angeordnet, welches vorzugsweise ein Gewebe ist. Im Kopfteil 2-ist eine Kupplung 6 zur Befestigung des Kerzenfilterelement in einem nicht gezeigten Behälter vorgesehen. Das Hüllelement 4 ist teilweise mit Öffnungen 7 versehen, die im rechten Teil der Fig. 1 beispielsweise kreisförmig ausgebildet sind und im linken Teil der Fig. 1 als schlitzförmige Öffnungen sichtbar sind, die mit der Achse des Hüllelements einen Winkel α bilden.

Im Betrieb ist das Kerzenfilterelement im nicht gezeigten Behälter angeordnet. Die Filtration erfolgt durch das Filtermittel 5 von außen nach innen, durch die Öffnungen 7 des Hüllelements 4, wobei sich das Klarfiltrat zwischen dem Hüllelement 4 und dem Zentralrohr 3 sammelt. Es tritt im unteren Teil des Zentralrohres 3 ein und verlässt das Zentralrohr 3 durch seine obere Öffnung in den nicht gezeigten Filtratraum des Filterbehälters. Der Ablauf des Filtrats wird durch die Öffnungen 7 im Hüllelement 4 wesentlich verbessert

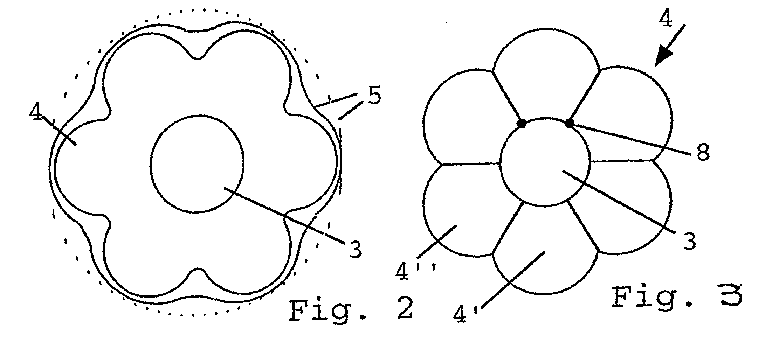

Fig. 2 zeigt ein hexalobales Hüllelement 4, welches an dem Zentralrohr 3 befestigt ist mit dem Filtermittel 5 (durchgezogene Linie) im Zustand der Filtration und dem Filtermittel 5 (gestrichelte Linie) im aufgeblähten Zustand während der Reinigung. Das Filtermittel 5 ist über das Hüllelement 4 derart gespannt, dass dieses während der Filtration von außen nach innen eine wellenförmige Oberfläche bildet und während der Rückspülung einen runden Querschnitt aufweist.

In Fig. 3 ist das Hüllelement aus sechs einzelnen Hüllteilen 4', 4" usw. zusammengesetzt. Die einzelnen Hüllteile 4', 4" usw., sind an den Punkten 8 an dem Zentralrohr 3 befestigt.

Das erfindungsgemäße Hüllelement 4 in einem Kerzenfilter hat den Vorteil, dass auf einfache Weise ein Filtermittel abgestützt werden kann und das Filtrat im Raum zwischen dem Zentralrohr 3 und dem Filtermittel 5 ungehindert ablaufen kann.

## Patentansprüche

1. Kerzenfilterelement zum Einbau in einen Druckbehälter, bestehend aus einem auf seiner Oberfläche geschlossenem, entnehmbar angeordnetem Zentralrohr (3), um welches Stützkörper angeordnet sind, über die ein Filtergewebe (5) gespannt ist, **dadurch gekennzeichnet, dass** der Stützkörper als ein hexalobales Hüllelement (4) ausgebildet ist und die Oberfläche des Hüllelements (4) Öffnungen (7) aufweist und die Krümmungen des Hüllelements (4) Halbkreise beschreiben.

2. Kerzenfilterelement nach Anspruch 1, **dadurch gekennzeichnet, dass** die Öffnungen (7) kreisförmig ausgebildet sind.

3. Kerzenfilterelement nach Anspruch 1, **dadurch gekennzeichnet, dass** die Öffnungen (7) schlitzförmig ausgebildet sind.

4. Kerzenfilterelement nach Anspruch 3, **dadurch gekennzeichnet, dass** die schlitzförmigen Öffnungen (7) mit der Achse des Hüllelements (4) einen Winkel α von kleiner als 120° bildet.

## Claims

1. Candle filter element for assembly in a pressurized container, consisting of a support body disposed around a central tube (3) with a closed surface, over which a filter cloth (5) is stretched, **characterized in that** the support body is formed as a hexa-lobed sheath element (4) and the surface of the sheath element (4) has openings (7), and the surface of the sheath element (4) is described by semicircles.

2. Candle filter element according to Claim 1, **characterized in that** the openings (7) are formed as circles.

3. Candle filter element according to Claim 1, **characterized in that** the openings (7) are formed as slits.

4. Candle filter element according to Claim 3, **characterized in that** the openings (7) are formed as slits forming an angle α of less than 120° with the axis of the sheath element (4).

## Revendications

1. Elément filtrant en forme de bougie à monter dans un récipient à pression, formé d'un tube central (3) amovible qui est fermé sur sa surface et autour duquel sont disposés des corps d'appui sur lesquels un tissu filtrant (5) est tendu,
**caractérisé en ce que** le corps d'appui est conçu comme un élément formant gaine à six lobes (4), la surface de l'élément formant gaine (4) présente des ouvertures (7) et les courbures de l'élément formant gaine (4) définissent des demi-cercles.

2. Elément filtrant en forme de bougie selon la revendication 1, **caractérisé en ce que** les ouvertures (7) ont une forme circulaire.

3. Elément filtrant en forme de bougie selon la revendication 1, **caractérisé en ce que** les ouvertures (7) ont la forme de fentes.

4. Elément filtrant en forme de bougie selon la revendication 3, **caractérisé en ce que** les ouvertures en forme de fentes (7) définissent avec l'axe de l'élément formant gaine (4) un angle α inférieur à 120°.
